# EUROPEAN PATENT APPLICATION

(11) **EP 4 769 606 A1**
(43) Date of publication of application: **01.07.2026**
(21) Application number: 25861204.3
(22) Date of filing: 05.08.2025
(51) Int. Cl.: H01M 10/04, H01M 10/42, H01M 4/38, H01M 4/485, H01M 10/0587, H01M 10/052, H01M 4/66

(54) **WIRE-TYPE TRI-ELECTRODE SECONDARY BATTERY**

(30) Priority: 27.08.2024 KR 20240115029
(71) Applicant: LG Energy Solution, Ltd., Seoul 07335 (KR)
(72) Inventor: SONG, Eun Ho, Daejeon 34122 (KR); AHN, Byung Sun, Daejeon 34122 (KR); LEEM, Han Jun, Daejeon 34122 (KR)
(74) Representative: Hoffmann Eitle
(86) International application number: PCT/KR2025/011698
(87) International publication number: WO 2026/049340

(57) **Abstract**

A wire-type three-electrode secondary battery according to some embodiments includes: a support having a hollow tubular structure and including a plurality of holes on a surface;
a reference electrode inserted into an interior of the support; and
an electrode assembly wound on the support.

Accordingly, some embodiments can stably perform three-electrode measurement even when there is physical movement.

## Description

### [Technical Field]

The present disclosure relates to a wire-type three-electrode secondary battery.

This application claims the benefit of priority from Korean Patent Application No. 10-2024-0115029, filed on August 27, 2024, the entire contents disclosed therein are incorporated by reference into this disclosure.

### [Background]

Interest in secondary batteries, which can be repeatedly used for a long time through recharging, is increasing to reduce dependence on fossil fuels while decreasing carbon emissions. Secondary batteries are used in various fields such as vehicles, portable electronic devices, and Energy Storage Systems (ESS), as well as wearable devices and flexible devices.

Secondary batteries are generally classified as cylindrical, prismatic, or pouch-type according to the shape. However, secondary batteries having such shapes may not be suitable for wearable devices and flexible devices. Accordingly, wire-type secondary batteries having flexibility can be used in wearable devices and flexible devices.

Meanwhile, to confirm the performance of a secondary battery, the electrode potential of the secondary battery should be measured. Measurement of electrode potential requires a three-electrode system including a reference electrode, a working electrode, and a counter electrode (or auxiliary electrode). The performance of a wire-type secondary battery can also be confirmed through a three-electrode system. In the case of wire-type secondary batteries, it is necessary to confirm performance under conditions where there is physical movement. Conventionally, three-electrode measurement was performed with the reference electrode placed outside the wire-type secondary battery, but this method had a problem in that three-electrode measurement was unstably performed when there was physical movement in the wire-type secondary battery.

Accordingly, there is a need for a technology that enables stable three-electrode measurement even when there is physical movement in a wire-type secondary battery.

### [Summary]

### [Technical Problem]

A technical problem to be solved by the technical spirit of the present disclosure is to provide a wire-type three-electrode secondary battery that can stably perform three-electrode measurement even when there is physical movement.

### [Technical Solution]

Some embodiments of the present disclosure that can solve the above problems are described below.

A wire-type three-electrode secondary battery according to some embodiments includes:
a support having a hollow tubular structure and including a plurality of holes on a surface;
a reference electrode inserted into an interior of the support; and
an electrode assembly wound on the support.

In some embodiments, the reference electrode may include a reference electrode active material layer on one side, the reference electrode active material layer may be located in the interior of the support, and the other side of the reference electrode opposite to the one side of the reference electrode may be located outside the support.

In some embodiments, the reference electrode active material layer may include one or more of lithium metal and lithium titanium oxide.

In some embodiments, the electrode assembly may include a first electrode, a first separator, and a second electrode,
wherein the first electrode, the first separator, and the second electrode may be sequentially stacked based on the support, and
wherein electrical polarities of the first electrode and the second electrode may be opposite to each other.

In some embodiments, the wire-type three-electrode secondary battery may include a second separator covering the electrode assembly.

In some embodiments, the second separator may also cover the support.

In some embodiments, the wire-type three-electrode secondary battery may include packaging covering the second separator.

In some embodiments, the electrode assembly may be a sheet-type.

In some embodiments, the electrode assembly may be wound spirally without overlapping.

In some embodiments, the electrode assembly may be wound spirally to overlap in a range of 0.1 times to 0.5 times the width of the electrode assembly.

### [Advantageous Effects]

Some embodiments of the present disclosure can stably perform three-electrode measurement even when there is physical movement.

The effects of embodiments of the present disclosure are not limited to the above-described effects, and other effects not mentioned can be clearly derived and understood by a person skilled in the art from the description described below. In other words, unintended effects of implementing the embodiments of the present disclosure may also be derived and understood by a person skilled in the art to which the embodiments of the present disclosure belong.

### [Brief Description of the Drawings]

FIG. 1 is a diagram schematically illustrating a wire-type three-electrode secondary battery according to some embodiments.
FIG. 2 is a cross-sectional view taken along line I-I' of FIG. 1.
FIG. 3 is a diagram schematically illustrating an electrode assembly included in a wire-type three-electrode secondary battery according to some embodiments.
FIG. 4 is a diagram schematically illustrating a support included in a wire-type three-electrode secondary battery according to some embodiments.
FIG. 5 is a diagram schematically illustrating a reference electrode included in a wire-type three-electrode secondary battery according to some embodiments.
FIG. 6 is a diagram schematically illustrating an electrode assembly wound on a support in some embodiments.
FIG. 7 is a diagram schematically illustrating an electrode assembly wound on a support in other embodiments.
FIG. 8 is a diagram schematically illustrating a portion of an electrode assembly wound to overlap on a support in still other embodiments.
FIG. 9 is a diagram schematically illustrating a second separator covering an electrode assembly in some embodiments.
FIG. 10 is a diagram schematically illustrating a second separator covering an electrode assembly in other embodiments.

### [Detailed Description]

Terms and words used in the present specification should not be construed as limited to conventional or dictionary meanings and should be interpreted with the meaning and concept in accordance with the technical idea of the present disclosure based on the principle that the inventors can appropriately define the meanings of terms or words in order to explain the invention in the best way.

In this specification, terms such as "include," "comprise," or "have" should be understood to specify the presence of features, numbers, steps, operations, components, or combinations thereof described in the specification, and should be understood as not precluding the presence or possibility of addition of one or more other features, numbers, steps, operations, components, or combinations thereof. In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but a case in which still another part is interposed therebetween.

It should be understood that the embodiments and drawings are merely examples of the present disclosure and do not represent all of the technical spirit of the present disclosure, and that there may be various equivalents and modifications that can replace them.

When it is determined that detailed descriptions of known configurations or functions may obscure the gist of the present disclosure in describing the present disclosure, the detailed descriptions thereof are omitted.

Since the drawings are provided to more completely explain the present disclosure to a person skilled in the art, shapes, sizes, and numbers of components in the drawings may be exaggerated, omitted, or schematically illustrated for clearer explanation. The shape, size, proportion, and number of each component in the drawings do not entirely reflect the actual shape, size, proportion, and number of each component.

### (first embodiment)

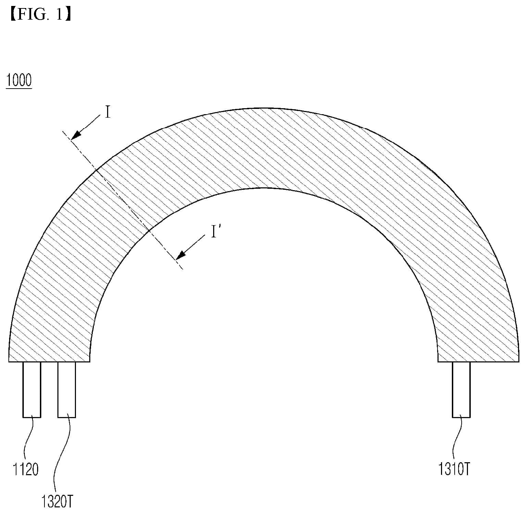

FIG. 1 is a diagram schematically illustrating a wire-type three-electrode secondary battery according to some embodiments.

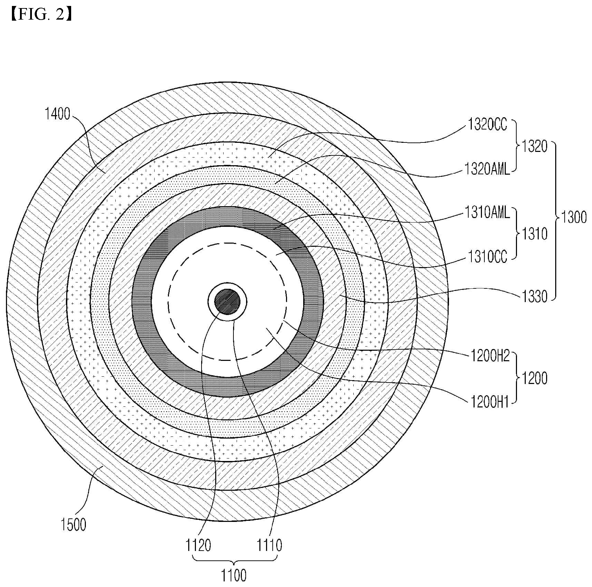

FIG. 2 is a cross-sectional view taken along line I-I' of FIG. 1.

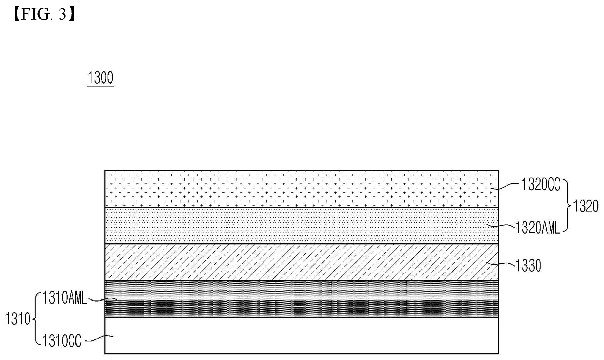

FIG. 3 is a diagram schematically illustrating an electrode assembly included in a wire-type three-electrode secondary battery according to some embodiments.

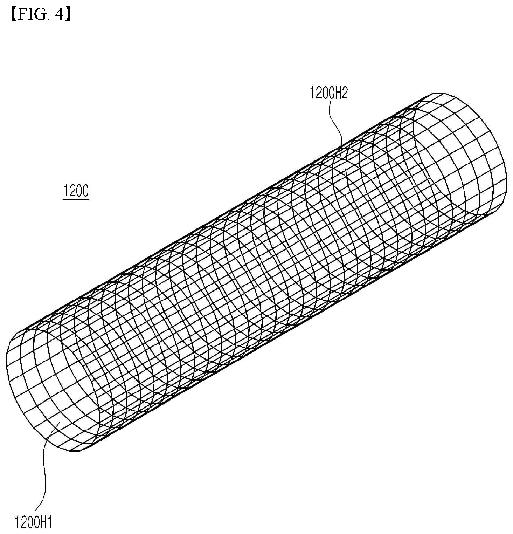

FIG. 4 is a diagram schematically illustrating a support included in a wire-type three-electrode secondary battery according to some embodiments.

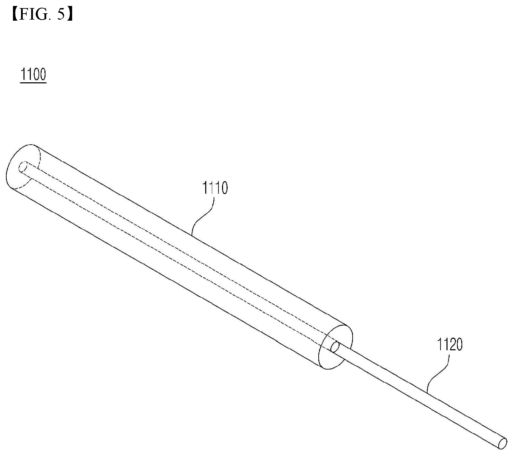

FIG. 5 is a diagram schematically illustrating a reference electrode included in a wire-type three-electrode secondary battery according to some embodiments.

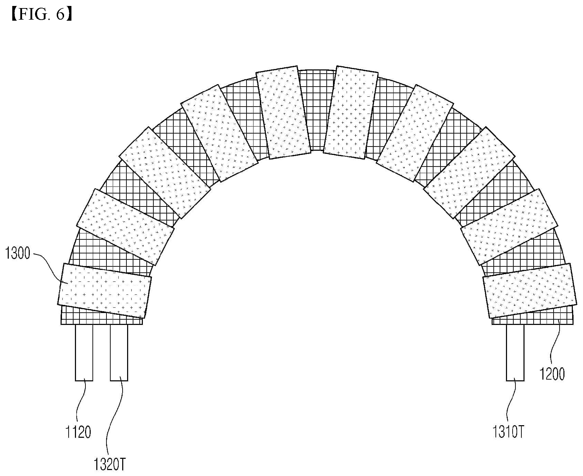

FIG. 6 is a diagram schematically illustrating an electrode assembly wound on a support in some embodiments.

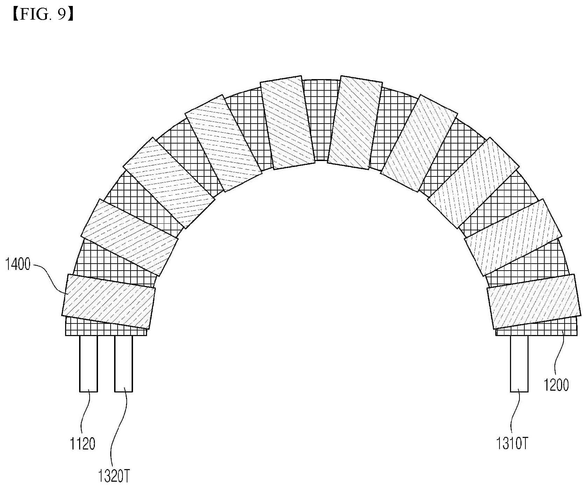

FIG. 9 is a diagram schematically illustrating a second separator covering an electrode assembly in some embodiments.

Referring to FIG. 1 to FIG. 6 and FIG. 9, a wire-type three-electrode secondary battery 1000 according to some embodiments may include a support 1200, a reference electrode 1100, an electrode assembly 1300, a second separator 1400, and packaging 1500.

Referring to FIG. 4, in some embodiments, the support 1200 has a hollow tubular structure and may include a plurality of holes 1200H2 on a surface. The support 1200 may include an inner space 1200H1 into which the reference electrode 1100 can be inserted.

As the support 1200 provides the inner space 1200H1, the reference electrode 1100 can be included in the wire-type three-electrode secondary battery 1000 as an integral unit together with the electrode assembly 1300. Accordingly, the wire-type three-electrode secondary battery 1000 can stably perform three-electrode measurement even when there is physical movement. Consequently, the wire-type three-electrode secondary battery 1000 may be advantageous for predicting and analyzing electrochemical behavior of the positive electrode and the negative electrode in situations where the wire-type three-electrode secondary battery 1000 is applied to wearable devices and flexible devices.

As the support 1200 includes the plurality of holes 1200H2 on the surface, electrolyte injected into the inner space 1200H1 of the support 1200 during a manufacturing stage of the wire-type three-electrode secondary battery 1000 can freely enter and exit through the plurality of holes 1200H2.

The support 1200 may serve as a basis for a wire-type shape of the wire-type three-electrode secondary battery 1000. The support 1200 can prevent deformation, collapse, destruction, and the like of the wire-type three-electrode secondary battery 1000 even when there is physical movement in the wire-type three-electrode secondary battery 1000. The support 1200 may provide flexibility and/or pliability to the wire-type three-electrode secondary battery 1000. The higher the flexibility and/or pliability of the support 1200, the more preferable it may be. The support 1200 may be a non-conductor.

In some embodiments, a material of the support 1200 may be one or more of polyethylene, polypropylene, polytetrafluoroethylene, polyvinylidene fluoride, polyacrylonitrile, polyimide, polyethylene terephthalate, polyamide-imide, polyester imide, polyether sulfone, and polysulfone.

Referring to FIG. 2, in some embodiments, the reference electrode 1100 may be inserted into an interior of the support 1200. Referring to FIG. 5, in some embodiments, the reference electrode 1100 may include a reference electrode active material layer 1110 and a metal wire 1120.

The reference electrode active material layer 1110 may surround one side of the metal wire 1120. In some embodiments, the reference electrode active material layer 1110 may include one or more of lithium metal and lithium titanium oxide.

Although FIG. 5 illustrates that the number of the metal wires 1120 is one, this is merely illustrative and the number of the metal wires 1120 may be plural. As a non-limiting example, the number of the metal wires 1120 may be two, and the two metal wires 1120 may be twisted with each other. A material of the metal wire 1120 may be a metal having excellent conductivity. As a non-limiting example, the material of the metal wire 1120 may be copper or copper coated with nickel.

Referring to FIG. 1, FIG. 6, and FIG. 9, in some embodiments, a portion of the reference electrode 1100 may be located in the interior of the support 1200 and the remainder may be located outside the support 1200. In some embodiments, an insulating layer may surround a portion of the reference electrode 1100 located in the interior of the support 1200. The reference electrode active material layer 1110 may be located in the interior of the support 1200. A portion of the metal wire 1120 may be located in the interior of the support 1200 and the remainder may be located outside the support 1200. A portion of the metal wire 1120 located outside the support 1200 may serve as a reference electrode tab through which electrical connection to the reference electrode 1200 is made during three-electrode measurement.

Referring to FIG. 2, in some embodiments, the electrode assembly 1300 may be wound on the support 1200. In some embodiments, the electrode assembly 1300 may be sheet-type. Referring to FIG. 2 and FIG. 3, in some embodiments, the electrode assembly 1300 may include a first electrode 1310, a first separator 1330, and a second electrode 1320. The first electrode 1310, the first separator 1330, and the second electrode 1320 may be sequentially stacked based on the support 1200. Electrical polarities of the first electrode 1310 and the second electrode 1320 may be opposite to each other.

The first electrode 1310 may include a first electrode current collector 1310CC. The first electrode current collector 1310CC may be located on the support 1200. The first electrode current collector 1310CC may include a material having conductivity without causing chemical changes to a finally manufactured electrode. As a non-limiting example, the first electrode current collector 1310CC may include aluminum, copper, stainless steel, nickel, titanium, or calcined carbon. As a non-limiting example, the first electrode current collector 1310CC may include aluminum, copper, and stainless steel surface-treated with carbon, nickel, titanium, silver, or the like. A fine uneven structure for increasing adhesion with the first electrode active material layer 1310AML may be formed on a surface of the first electrode current collector 1310CC. The first electrode current collector 1310CC may be a sheet-type. A thickness of the first electrode current collector 1310CC may be in a range of about 3 µm to about 500 µm.

The first electrode 1310 may include a first electrode active material layer 1310AML. The first electrode 1310 may be a positive electrode or a negative electrode. The first electrode active material layer 1310AML may be located on the first current collector 1310CC. The first electrode active material layer 1310AML may include an electrode active material, a binder, and a conductive material. The first electrode active material layer 1310AML may be a sheet-type.

If the first electrode 1310 is a positive electrode, the first electrode active material layer 1310AML may include a positive electrode active material. As a non-limiting example, the positive electrode active material may include one or more of lithium-iron-based oxide (for example, LiFePO₄, etc.), lithium-manganese-based oxide (for example, LiMnO₂, LiMn₂O₄, etc.), lithium-cobalt-based oxide (for example, LiCoO₂, etc.), lithium-nickel-based oxide (for example, LiNiO₂, etc.), lithium-nickel-manganese-based oxide (for example, LiNi_{1-y1}Mn_{y1}O₂ (where 0<y1<1) and LiMn_{2-z1}Ni_{z1}O₄ (where 0<z1<2), etc.), lithium-nickel-cobalt-based oxide (for example, LiNi_{1-y2}Co_{y2}O₂ (where 0<y2<1), etc.), lithium-manganese-cobalt-based oxide (for example, LiCo_{1-y3}Mn_{y3}O₂ (where 0<y3<1) and LiMn_{2-z2}Co_{z2}O₄ (where 0<z2<2), etc.), lithium-nickel-manganese-cobalt-based oxide (for example, Li(Niₚ₁Co_{q1}Mnᵣ₁)O₂ (where 0<p1<1, 0<q1<1, 0<r1<1, p1+q1+r1=1), Li(Niₚ₂Co_{q2}Mnᵣ₂)O₄ (where 0<p2<2, 0<q2<2, 0<r2<2, p2+q2+r2=2), etc.), and lithium-nickel-cobalt-manganese-metal (M) oxide (for example, Li(Niₚ₃Co_{q3}Mnᵣ₃Mₛ₁)O₂ (where M is selected from the group consisting of Al, Cu, Fe, V, Cr, Ti, Zr, Zn, Ta, Nb, Mg, B, W, and Mo, 0<p3<1, 0<q3<1, 0<r3<1, 0<s1<1, p3+q3+r3+s1=1), etc.).

If the first electrode 1310 is a negative electrode, the first electrode active material layer 1310AML may include a negative electrode active material. As a non-limiting example, the negative electrode active material may include one or more of lithium metal; graphite-based carbon materials such as amorphous, plate-shaped, flake-shaped, spherical, or fibrous natural graphite or artificial graphite; amorphous carbon materials such as soft carbon and hard carbon; metals such as Cu, Ni, Na, K, Rb, Cs, Fr, Be, Mg, Ca, Sr, Si, Sb, Pb, In, Zn, Ba, Ra, Ge, Al, and Sn, or alloys of the metals with lithium; PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LixFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, Group 2, Group 3 elements of the periodic table, halogen; 0<x≤1; 1≤y≤3; 1≤z≤8); Si, SiOₓ (0<x≤2), Si-Y alloy (where Y is an element selected from the group consisting of alkali metals, alkaline earth metals, Group 13 elements, Group 14 elements, transition metals, rare earth elements, and combinations thereof, and is not Si), Sn, SnO2, Sn-Y (where Y is an element selected from the group consisting of alkali metals, alkaline earth metals, Group 13 elements, Group 14 elements, transition metals, rare earth elements, and combinations thereof, and is not Sn).

As a non-limiting example, the binder may include one or more of polyvinylidene fluoride, polyvinyl alcohol, carboxymethyl cellulose, starch, hydroxypropyl cellulose, regenerated cellulose, polyvinyl pyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluorine rubber.

As a non-limiting example, the conductive material may include one or more of carbon nanotubes; graphite; carbon-based materials such as carbon black, acetylene black, Ketjen black, channel black, furnace black, lamp black, and thermal black; conductive fibers such as carbon fiber and metal fiber; metal powders such as carbon fluoride, aluminum, and nickel powder; conductive whiskers such as zinc oxide and potassium titanate; conductive metal oxides such as titanium oxide; and polyphenylene.

The first separator 1330 may be located between the first electrode active material layer 1310AML and the second electrode active material layer 1320AML. The first separator 1330 may be sheet-type. As a non-limiting example, the first separator 1330 may be a porous polymer base substrate made of a polyolefin-based polymer selected from the group consisting of ethylene homopolymer, propylene homopolymer, ethylene-butene copolymer, ethylene-hexene copolymer, and ethylene-methacrylate copolymer; a porous polymer base substrate made of a polymer selected from the group consisting of polyester, polyacetal, polyamide, polycarbonate, polyimide, polyetheretherketone, polyethersulfone, polyphenylene oxide, polyphenylene sulfide, and polyethylene naphthalate; a porous polymer base substrate having a porous coating layer formed of a mixture of inorganic particles and a binder polymer on at least one surface of the porous polymer base substrate; or a porous base substrate formed of a mixture of inorganic particles and a binder polymer.

The second electrode 1320 may include a second electrode active material layer 1320AML. The second electrode 1320 may be a positive electrode or a negative electrode. If the first electrode 1310 is a positive electrode, the second electrode 1320 may be a negative electrode, and if the first electrode 1310 is a negative electrode, the second electrode 1320 may be a positive electrode. The second electrode active material layer 1320AML may be located on the first separator 1330. The second electrode active material layer 1320AML may include an electrode active material, a binder, and a conductive material. The electrode active material, binder, and conductive material that the second electrode active material layer 1320AML may include are the same as those described above for the first electrode active material layer 1310AML. The second electrode active material layer 1320AML may be sheet-type.

The second electrode 1320 may include a second electrode current collector 1320CC. The second electrode current collector 1320CC may be located on the second electrode active material layer 1320AML. Materials that the second electrode current collector 1320CC may include and the structure of the second electrode current collector 1320CC are the same as those described above for the first electrode current collector 1310CC.

Referring to FIG. 1, FIG. 6, and FIG. 9, a first electrode tab 1310T and a second electrode tab 1320T may protrude from both ends of the wire-type three-electrode secondary battery 1000. One of the first electrode tab 1310T and the second electrode tab 1320T may be located on a same side as a reference electrode tab. However, alternatively, the first electrode tab 1310T and the second electrode tab 1320T may protrude from one end of the wire-type three-electrode secondary battery 1000. In addition, both the first electrode tab 1310T and the second electrode tab 1320T may be located on the same side as the reference electrode tab.

The first electrode tab 1310T may be connected to the first electrode current collector 1310CC through welding or the like. The second electrode tab 1320T may be connected to the second electrode current collector 1320CC through welding or the like. During three-electrode measurement, electrical connection to the first electrode 1310 may be made through the first electrode tab 1310T. During three-electrode measurement, electrical connection to the second electrode 1320 may be made through the second electrode tab 1320T.

Referring to FIG. 6, the electrode assembly 1300 may be wound spirally on the support 1200 without overlapping. In general, the electrode assembly 1300 may have lower flexibility and/or pliability than the support 1200. Therefore, by winding the electrode assembly 1300 spirally on the support 1200 without overlapping, flexibility and/or pliability of the wire-type three-electrode secondary battery 1000 can be increased. An interval between the electrode assemblies 1300 wound spirally on the support 1200 without overlapping may be in a range of 2 times the width W of the electrode assembly 1300. When the interval is too large, performance such as capacity of the wire-type three-electrode secondary battery 1000 may deteriorate.

Referring to FIG. 9, in some embodiments, the second separator 1400 may cover the electrode assembly 1300. The second separator 1400 may not cover the support 1200. In the present specification, "A covers B" means that A is in direct contact with B and blocks B so that B is not visible from outside. The second separator 1400 may be wound spirally on the support 1200 along the electrode assembly 1300 without overlapping.

As a non-limiting example, in a manufacturing process of the wire-type three-electrode secondary battery 1000, the second separator 1400 may be wound on the support 1200 along the electrode assembly 1300 after the electrode assembly 1300 is wound on the support 1200.

As a non-limiting example, the second separator 1400 may be a part of the electrode assembly 1300. That is, the electrode assembly 1300 may be a laminate in which the first electrode 1310, the first separator 1330, the second electrode 1320, and the second separator 1400 are sequentially stacked. In this case, in the manufacturing process of the wire-type three-electrode secondary battery 1000, the second separator 1400 may be wound on the support 1200 when the electrode assembly 1300 is wound on the support 1200. The second separator 1400 may be located on the second electrode current collector 1320CC.

A material and structure of the second separator 1400 are the same as those described above for the first separator 1330.

Referring to FIG. 1 and FIG. 2, the packaging 1500 may cover the second separator 1400. The packaging 1500 may protect all components except for the first electrode tab 1310T, the second electrode tab 1320T, and the reference electrode tab from an external environment.

In some embodiments, the packaging 1500 may include a pouch of a polymer material. As a non-limiting example, the pouch of the polymer material may include one or more of PET, PVC, HDPE, and epoxy resin.

In some embodiments, the packaging 1500 may additionally include a moisture barrier layer, an insulating layer, a heat-sealing layer, and the like. As a non-limiting example, the moisture barrier layer may include a metal such as aluminum. As a non-limiting example, the insulating layer may include polyester or polyamide. As a non-limiting example, the heat-sealing layer may include polypropylene, polycarbonate, polyethylene, or the like.

### (second embodiment)

Regarding the second embodiment, only differences from the first embodiment will be described.

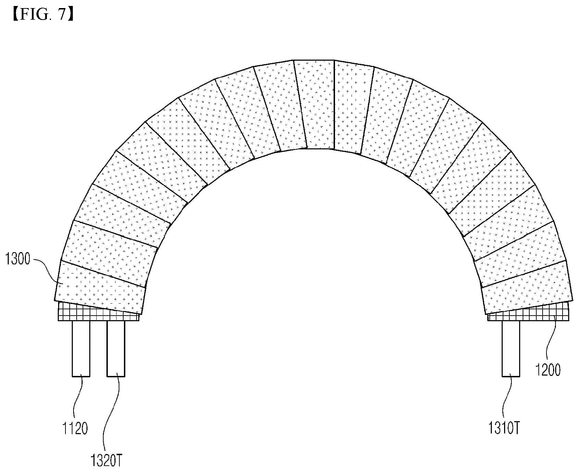

FIG. 7 is a diagram schematically illustrating an electrode assembly wound on a support in other embodiments.

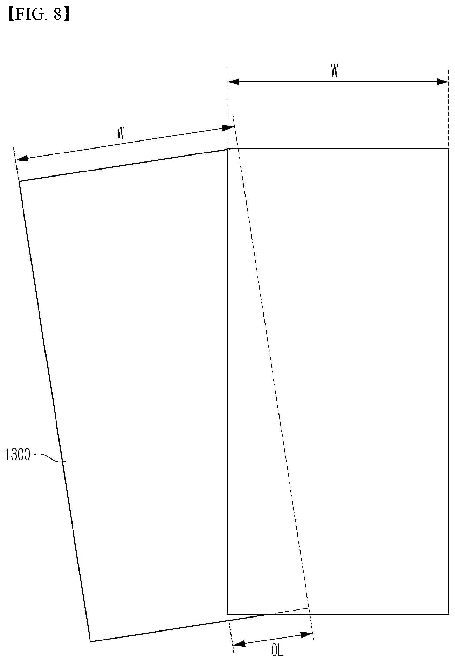

FIG. 8 is a diagram schematically illustrating a portion of an electrode assembly wound to overlap on a support in still other embodiments.

Referring to FIG. 7 and FIG. 8, the electrode assembly 1300 may be wound spirally on the support 1200 to overlap. However, as described above, since the electrode assembly 1300 may generally have lower flexibility and/or pliability than the support 1200, if the electrode assembly 1300 overlaps too much, flexibility and/or pliability of the wire-type three-electrode secondary battery 1000 may be significantly reduced. In some embodiments, the electrode assembly 1300 may overlap in a range of 0.1 times to 0.5 times the width W of the electrode assembly 1300. Referring to FIG. 8, a length of an overlap width OL may be in a range of 0.1 times to 0.5 times the width W of the assembly 1300.

The second embodiment may have lower flexibility and/or pliability than the first embodiment, but may have higher performance such as capacity than the first embodiment.

### (third embodiment)

Regarding the third embodiment, only differences from the first embodiment will be described.

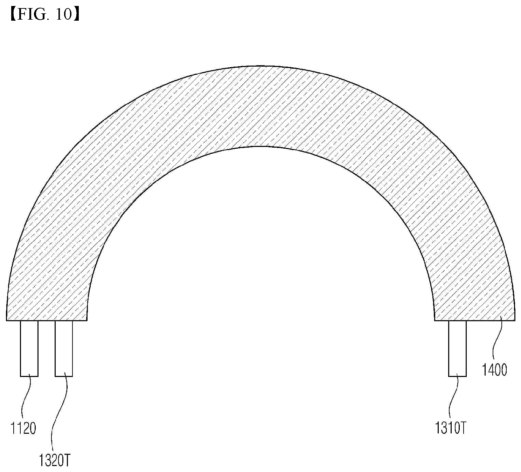

FIG. 10 is a diagram schematically illustrating a second separator covering an electrode assembly in other embodiments.

Referring to FIG. 10, in some embodiments, the second separator 1400 may cover not only the electrode assembly 1300 but also the support 1200.

The third embodiment may have better safety than the first embodiment.

The foregoing description is merely illustrative of the present disclosure. The scope of the present disclosure should be interpreted according to the claims, and all technical concepts within an equivalent or equal scope thereof should be construed as being included within the scope of the present disclosure.

### [Description of Reference Numerals]

1000: wire-type three-electrode secondary battery
1100: reference electrode
1110: reference electrode active material layer
1120: metal wire
1200: support
1200H1: inner space
1200H2: hole
1300: electrode assembly
1310: first electrode
1310CC: first electrode current collector
1310AML: first electrode active material layer
1320: second electrode
1320CC: second electrode current collector
1320AML: second electrode active material layer
1330: first separator
1400: second separator
1500: packaging

## Claims

1. A wire-type three-electrode secondary battery, comprising:
a support having a hollow tubular structure and comprising a plurality of holes on a surface;
a reference electrode inserted into an interior of the support; and
an electrode assembly wound on the support.

2. The wire-type three-electrode secondary battery of claim 1, wherein the reference electrode comprises a reference electrode active material layer on one side,
wherein the reference electrode active material layer is located in the interior of the support, and
wherein the other side of the reference electrode opposite to the one side of the reference electrode is located outside the support.

3. The wire-type three-electrode secondary battery of claim 2, wherein the reference electrode active material layer comprises one or more of lithium metal and lithium titanium oxide.

4. The wire-type three-electrode secondary battery of claim 1, wherein the electrode assembly comprises a first electrode, a first separator, and a second electrode,
wherein the first electrode, the first separator, and the second electrode are sequentially stacked based on the support, and
wherein electrical polarities of the first electrode and the second electrode are opposite to each other.

5. The wire-type three-electrode secondary battery of claim 1, further comprising a second separator covering the electrode assembly.

6. The wire-type three-electrode secondary battery of claim 5, wherein the second separator also covers the support.

7. The wire-type three-electrode secondary battery of claim 5, further comprising packaging covering the second separator.

8. The wire-type three-electrode secondary battery of claim 1, wherein the electrode assembly is a sheet-type.

9. The wire-type three-electrode secondary battery of claim 8, wherein the electrode assembly is wound spirally without overlapping.

10. The wire-type three-electrode secondary battery of claim 8, wherein the electrode assembly is wound spirally to overlap in a range of 0.1 times to 0.5 times the width of the electrode assembly.
